# EUROPÄISCHE PATENTSCHRIFT

(11) **EP 4 332 536 B1**
(45) Veröffentlichungstag und Bekanntmachung des Hinweises auf die Patenterteilung: **29.10.2025**
(21) Anmeldenummer: 22193757.6
(22) Anmeldetag: 02.09.2022
(51) Int. Cl.: G01M 3/26, G01M 99/00

(54) **VORRICHTUNG ZUM PRÜFEN EINER VERBINDUNG EINES GARANTIEBANDS UND/ODER MINDESTENS EINES ANBINDUNGSMITTELS EINES VERSCHLUSSDECKELS MIT EINEM DECKELGRUNDKÖRPER UND ZUM PRÜFEN EINER DICHTIGKEIT DES DECKELGRUNDKÖRPERS**
DEVICE FOR TESTING A CONNECTION OF A TAMPER-EVIDENT RING AND/OR AT LEAST ONE FASTENING MEANS OF A CLOSURE CAP TO A CAP BODY AND FOR TESTING THE TIGHTNESS OF THE CAP BODY
DISPOSITIF DE VÉRIFICATION D'UNE LIAISON D'UNE BANDE DE GARANTIE ET/OU D'AU MOINS UN MOYEN DE RACCORDEMENT D'UN COUVERCLE DE FERMETURE DOTÉ D'UN CORPS DE BASE DE COUVERCLE ET DE VÉRIFICATION D'UNE ÉTANCHÉITÉ DU CORPS DE BASE DE COUVERCLE

(43) Veröffentlichungstag der Anmeldung: 06.03.2024
(73) Patentinhaber: PackSys Global AG, 8630 Rüti (CH)
(72) Erfinder: HÜRLIMANN, Martin, 3373 Röthenbach (CH)
(74) Vertreter: Keller Schneider Patent- und Markenanwälte AG

(56) Entgegenhaltungen:
- WO-A1-2022/137098
- US-A- 4 899 574

## Beschreibung

### Technisches Gebiet

Die Erfindung betrifft eine Vorrichtung zum Prüfen einer Verbindung eines Garantiebands und/oder mindestens eines Anbindungsmittels eines Verschlussdeckels mit einem Deckelgrundkörper und zum Prüfen einer Dichtigkeit des Deckelgrundkörpers, umfassend ein Mitnahmeelement zum Ergreifen des Garantiebands und/oder des mindestens einen Anbindungsmittels, ein IKontaktelement für den Deckelgrundkörper, wobei das Mitnahmeelement und das Kontaktelement derart in einer Interaktionsrichtung relativ zueinander beweglich sind, dass eine Abreisskraft auf Verbindungselemente zwischen Deckelgrundkörper und Garantieband und/oder das Anbindungsmittel ausübbar ist und eine Kraftmessvorrichtung zur Messung der Abreisskraft während der Relativbewegung zwischen dem Garantieband und/oder Anbindungsmittel und dem Deckelgrundkörper. Die Erfindung betrifft weiter eine Anlage zum Schneiden eines Garantiebands und/oder mindestens eines Anbindungsmittels eines Verschlussdeckels und ein Verfahren zum Prüfen einer Verbindung eines Garantiebands und/oder mindestens eines Anbindungsmittels eines Verschlussdeckels mit einem Deckelgrundkörper und zum Prüfen einer Dichtigkeit des Deckelgrundkörpers.

### Stand der Technik

Es ist bekannt, Verschlussdeckel, z. B. Flaschenverschlüsse mit Deckeln aus Kunststoff oder Metallblech, mit Garantiebändern und/oder mit Anbindungsmitteln zu versehen. Garantiebänder dienen zur Originalitätssicherung und stellen sicher, dass unmittelbar erkennbar ist, wenn ein Verschlussdeckel nach der Erstbefüllung eines Behälters zwischenzeitlich entfernt und wieder angebracht wurde. Dies könnte ein Hinweis auf einen Austausch oder eine Verunreinigung des Behälterinhalts sein und zeigt dem Nutzer an, dass er den Behälterinhalt nicht nutzen - ein Lebensmittel also beispielsweise nicht konsumieren - sollte.

Garantiebänder sind über eine Schwächungslinie an einem Grundkörper des Verschlussdeckels angeordnet. Beim Entfernen des Verschlussdeckels (z. B. durch Abschrauben) wirkt das Garantieband derart mit einem Gegenstück am Behälter zusammen, dass es vom Deckelgrundkörper abgerissen und/oder entlang seines Umfangs durchtrennt wird. In beiden Fällen ist angesichts des beschädigten bzw. nicht mehr vorhandenen Garantiebandes ersichtlich, dass der Verschlussdeckel (zwischenzeitlich) entfernt wurde.

Bekannte Garantiebänder sind über eine Mehrzahl von Verbindungselementen (z. B. Stegen bzw. Brücken) am Deckelgrundkörper angebracht, wobei der Grundkörper, die Verbindungselemente und der Ring einstückig ausgebildet sind. Sie umfassen weiter einen umlaufenden wulstartigen Vorsprung am Behälter, welcher das Garantieband beim Entfernen des Deckels zurückhält. Die Schwächungslinie kann während des Formens des Deckels mit eingebracht werden oder erst in einem nachträglichen Schnitt, z. B. durch das Einbringen von geeigneten Schlitzen.

Anbindungsmittel ("Tether") stellen sicher, dass der Verschlussdeckel auch nach dem Öffnen und dem Entfernen vom Behälter an letzterem gehalten bleibt. Es wird so verhindert, dass der Verschlussdeckel verloren geht oder unachtsam weggeworfen wird, was zu einer unerwünschten Abfallbelastung führt. Die Anbindungsmittel verlaufen in der Regel zwischen einem Ring, der am Behälter (z. B. am Flaschenhals) verbleibt, insbesondere dem Garantiering, und dem Grundkörper des Verschlussdeckels. Sie sind bandartig ausgeführt und werden beim Öffnen des Verschlussdeckels aufgrund einer geeigneten Schlitzgeometrie am Verschlussdeckel erzeugt. Es sind Anbindungsmittel mit einer einzigen solchen Verbindung und solche mit mehreren Verbindungen bekannt.

Sowohl bei Garantiebändern als auch bei Anbindungsmitteln sollte sichergestellt werden, dass die Garantiebänder die gestellten Anforderungen (z. B. hinsichtlich einer zum Ab- bzw. Aufreissen oder zur Herstellung benötigten Kraft) erfüllen. Dazu werden stichprobenweise Deckel der Produktion entnommen und geprüft. Bisher erfolgte die Prüfung in der Regel manuell bzw. mit manuell bedienten, speziell ausgerüsteten Zug-Dehnungs-Messgeräten, wobei die Abreisskraft mit Hilfe eines Kraftsensors gemessen und die zum Abreissen (oder Aufreissen) benötigte Kraft bestimmt wurde. Liegt diese Kraft ausserhalb eines vorgegebenen Bereichs (welcher u. a. von der Art des Behälters und dem Material sowie der Geometrie des Deckels abhängig ist), liegt ein Fehler im Herstellungsprozess vor, der zu beheben ist, z. B. durch die Anpassung von Betriebsparametern und/oder den Austausch von Werkzeugen.

Die WO 2020/053286 A1 der vorliegenden Anmelderin beschreibt eine Vorrichtung zum Prüfen einer Verbindung eines Garantiebands einer Originalitätssicherung eines Verschlussdeckels mit einem Deckelgrundkörper, umfassend ein Mitnahmeelement zum Ergreifen des Garantiebands, ein Anschlagelement für den Deckelgrundkörper, wobei das Mitnahmeelement und das Anschlagelement derart relativ zueinander beweglich sind, dass eine Abreisskraft auf das Garantieband ausübbar ist, eine Kraftmessvorrichtung zur Messung der Abreisskraft während der Relativbewegung des Garantiebands und des Deckelgrundkörpers und eine Trennvorrichtung zum Durchtrennen des Garantiebandes nach dem Abreissen vom Deckelgrundkörper.

Damit lässt sich der Prüfvorgang für die Abreisskräfte systematisch und bei Bedarf automatisiert durchführen. Allerdings müssen Verschlussdeckel weiteren Anforderungen genügen. Eine weitere Eigenschaft, die von Verschlussdeckeln gefordert ist, ist die Dichtheit. Zum einen soll das Entweichen von Gasen, insbesondere Kohlendioxid bei kohlesäurehaltigen Getränken, verhindert werden, zum anderen ist auch das Eindringen von Gasen aus der Umwelt unerwünscht. Für die Dichtheitsprüfung sind spezifische Geräte verfügbar.

Die WO 2022/137038 A1 betrifft einen Messapparat und eine Methode zur Messung einer Abreisskraft von Verbindungselementen eines Verschlusses, zum Beispiel zum Verschliessen einer Flasche. Die Verbindungselemente können den Verschluss mit einem Garantieband verbinden
Die US 4 889 574 A offenbart eine Leckageprüfung von versiegelten Behältern, wobei ein Ring gegen ein Versiegelungselement gedrückt wird, um eine druckdichte Kammer zu bilden. In der druckdichten Kammer wird ein Unterdruck angelegt.

Die Prüfung der verschiedenen Eigenschaften von Verschlussdeckeln gestaltet sich aber insgesamt als recht aufwendig.

### Darstellung der Erfindung

Aufgabe der Erfindung ist es, eine dem eingangs genannten technischen Gebiet zugehörende Vorrichtung zu schaffen, welche die Prüfung von Verschlussdeckeln vereinfacht.

Die Lösung der Aufgabe ist durch die Merkmale des Anspruchs 1 definiert. Gemäss der Erfindung weist die Vorrichtung einen Dichtstempel mit einer Dichtstruktur auf, so dass eine abgedichtete Kammer zwischen dem Dichtstempel und dem Deckelgrundkörper ausbildbar ist. Die Vorrichtung umfasst weiter eine Einrichtung zur Einstellung eines vorgegebenen Gasdrucks in der Kammer und eine Einrichtung zur Erfassung eines Gasaustritts aus der Kammer und/oder eines Gaseintritts in die Kammer. Das Mitnahmeelement und der Dichtstempel sind gemeinsam an einem in der Interaktionsrichtung beweglichen Träger senkrecht zur Interaktionsrichtung beabstandet angeordnet.

Bei einem erfindungsgemässen Verfahren zum Prüfen einer Verbindung eines Garantiebands und/oder mindestens eines Anbindungsmittels eines Verschlussdeckels mit einem Deckelgrundkörper und zum Prüfen einer Dichtigkeit des Deckelgrundkörpers, insbesondere mit einer erfindungsgemässen Vorrichtung, werden folgende Schritte durchgeführt:
a) Positionieren des Deckelgrundkörpers in einer ersten Position;
b) Bewegen eines an einem Träger angeordneten Dichtstempels in einer Interaktionsrichtung, so dass der in der ersten Position befindliche Deckelgrundkörpers kontaktiert und zwischen dem Dichtstempel und dem Deckelgrundkörper eine abgedichtete Kammer ausgebildet wird;
b) Einstellen eines vorgegebenen Gasdrucks in der Kammer;
c) Erfassen eines Gasaustritts aus der Kammer oder eines Gaseintritts in die Kammer;
d) Entfernen des Dichtstempels vom Deckelgrundkörper durch Bewegen des Trägers gegen die Interaktionsrichtung;
e) Bewegen des Deckelgrundkörpers in eine zweite Position, die von der ersten Position beabstandet ist;
f) Bewegen des Trägers in der Interaktionsrichtung, so dass das Garantieband und/oder das mindestens eine Anbindungsmittel von einem am Träger beabstandet vom Dichtstempel angeordneten Mitnahmeelement ergriffen wird;
g) Durchführen einer Relativbewegung zwischen dem Mitnahmeelement und einem Kontaktelement, so dass eine Abreisskraft auf Verbindungselemente zwischen Deckelgrundkörper und Garantieband und/oder das mindestens eine Anbindungsmittel ausgeübt wird;
h) Messen der Abreisskraft während der Relativbewegung zwischen dem Garantieband und/oder Anbindungsmittel und dem Deckelgrundkörper.

Der Dichtstempel wirkt mit der Deckelinnenseite zusammen, namentlich mit dem Boden des Deckelgrundkörpers und/oder mit dessen Mantel. Insbesondere wirkt er mit entsprechenden Dichtlippen zur Abdichtung des Verschlussdeckels gegenüber dem Flaschenhals zusammen.

Die Dichtstruktur ist insbesondere an der Stirnseite des Dichtstempels angeordnet. Sie wirkt mit der Innenseite des Verschlussdeckels zusammen, um die Abdichtung der Kammer zu erreichen. Im einfachsten Fall handelt es sich bei der Dichtstruktur um eine stirn- oder mantelseitig umlaufende Struktur mit gleichbleibendem Profil. Die Dichtstruktur kann durch eine Materialportion des Dichtstempels, also einstückig mit diesem, ausgebildet sein oder durch ein separates Element, das am Dichtstempel angeordnet ist.

Der Abstand der Zentren des Mitnahmeelements und des Dichtstempels senkrecht zur Interaktionsrichtung übersteigt insbesondere den Durchmesser der zu prüfenden Verschlussdeckel, so dass in einer ersten Position des Verschlussdeckels mit Hilfe des Dichtstempels dessen Dichtigkeit und in einer zweiten, insbesondere nachfolgenden, Position die Abreisskraft mittels des Mitnahmeelements geprüft werden kann, ohne Behinderung des jeweiligen anderen Elements.

Als Abreisskraft wird hier eine Kraft verstanden, die so am Garantieband oder am Anbindungsmittel angreift und in eine solche Richtung wirkt, dass - bei einem ausreichenden Wert (der "zum Abreissen erforderlichen Kraft") - das Garantieband bzw. das Anbindungsmittel oder jeweils ein Element davon vom Deckelgrundkörper abgerissen und/oder entlang seines Umfangs aufgerissen wird. Insbesondere handelt es sich dabei um eine Kraft, bei der eine Brückenverbindung zwischen Grundkörper und Garantiering oder eine Verbindung des Anbindungsmittels zwischen Grundkörper und Ring reisst.

Die Messung der Abreisskraft umfasst bevorzugt die Aufnahme eines Kraft-Zeit- bzw. Kraft-Weg-Verlaufs mindestens bis zum Abreissen. Bei der Prüfung eines Verschlussdeckels mit Garantiering und Anbindungsmitteln werden bei der Messung der Abreisskräfte mit wachsendem Abstand zwischen Kontaktelement und Mitnahmeelement zunächst Brückenverbindungen des Garantierings reissen, was sich in einem ersten Kraftmaximum bzw. ersten Kraftmaxima äussert. Bei einem deutlich grösseren Abstand ergibt sich dann ein weiteres Maximum (oder weitere Maxima) beim Reissen der Verbindung(en) des mindestens einen Anbindungsmittels. Weil sich die Abstände und damit auch die Zeitpunkte deutlich voneinander unterscheiden, können die Ergebnisse ohne weiteres dem Garantieband bzw. dem mindestens einen Anbindungsmittel zugeordnet werden. Zur Beschleunigung des Messvorgangs kann die Relativbewegung nach dem Abreissen des Garantiebandes zwischenzeitlich beschleunigt werden, bis eine (in der Regel vorbekannte) minimale Trenndistanz für das mindestens eine Anbindungsmittel erreicht wird.

Alternativ wird aber nur eine maximale Abreisskraft gemessen bzw. gespeichert oder weitergegeben; diese entspricht im Wesentlichen der erwähnten zum Abreissen erforderlichen Kraft.

Die erfindungsgemässe Vorrichtung kann zur Prüfung sowohl der Dichtigkeit eines Verschlussdeckels als auch der Eigenschaften von dessen Garantieband und/oder Anbindungsmittels eingesetzt werden. Sie kann aber in Bezug auf einen einzelnen Verschlussdeckel oder ein ganzes Los nur für die Dichtigkeitsprüfung oder die Prüfung der Band-/Anbindungsmitteleigenschaften eingesetzt werden. Es müssen also nicht zwingend in jedem Fall beide Modalitäten geprüft werden, sondern die Prüfschritte "Dichtigkeit", "Garantieband" und/oder "Anbindungsmittel" sind bevorzugt selektiv aktivierbar und deaktivierbar.

Die erfindungsgemässe Vorrichtung ermöglicht die - insbesondere automatische - Messung sowohl der Dichtigkeit als auch der Eigenschaften von Garantiebändern und/oder Anbindungsmitteln. Weil das Mitnahmeelement und der Dichtstempel gemeinsam an einem Träger angeordnet sind, ist für die entsprechende Bewegung beider Elemente nur ein einziger Antrieb notwendig. wodurch der konstruktive Aufwand für die Vorrichtung reduziert ist.

Bevorzugt ist das I<ontaktelement ortsfest angeordnet. Das Mitnahmeelement und der Dichtstempel werden bewegt, so dass sich die benötigte Relativbewegung zum Kontaktelement ergibt.

Bei einer bevorzugten Ausführungsform ist das Kontaktelement stirnseitig an einem Dorn ausgebildet, und das Mitnahmeelement ist entlang der Interaktionsrichtung linear relativ zum Dorn beweglich. Dabei ist der Dorn insbesondere ortsfest und das Mitnahmeelement beweglich ausgeführt.

Der Dorn hat - zumindest im Kontaktbereich mit dem Verschlussdeckel - insbesondere die Geometrie eines geraden Kreiszylinders, wobei der Durchmesser etwas kleiner ist als der Innendurchmesser des Verschlussdeckels. Die stirnseitige Fläche des Dorns ist derart ausgebildet, dass sie grossflächig mit dem Deckelgrundkörper zusammenwirken kann. Der Boden oder eine andere Partie des Deckelgrundkörpers wirkt auf der Deckelinnenseite mit der stirnseitigen Fläche zusammen und definiert die axiale Position des Deckelgrundkörpers. Durch eine Relativbewegung zwischen Dorn und Mitnahmeelement, bei welcher sich das Mitnahmeelement von der Stirnseite des Dorns weg bewegt, wird eine Abreisskraft auf das Garantieband bzw. das Anbindungsmittel ausgeübt.

Beim Mitnahmeelement kann es sich um eine wulstartige Struktur handeln, welche im Wesentlichen der Struktur am Behälter entspricht, mit welchem der Verschlussdeckel zusammenwirken soll. Das Mitnahmeelement kann aber auch durch mehrere beabstandete Strukturen, z. B. Nocken, gebildet sein. In beiden Fällen werden der Verschlussdeckel mit angebrachtem Garantieband bzw. Anbindungsmittel und das Mitnahmeelement vor der Messung der Abreisskraft so relativ zueinander positioniert, dass das Garantieband bzw. Anbindungsmittel das Mitnahmeelement zumindest bereichsweise hintergreift. Dazu kann - insbesondere bei einem Mitnahmeelement mit fixer Form - der Verschlussdeckel mit Garantieband bzw. Anbindungsmittel über das Mitnahmeelement aufgeschoben bzw. das Mitnahmeelement in den Verschlussdeckel eingeschoben werden. Mitnahmeelemente mit veränderlicher Form, z. B. mit radial beweglichen Krallen, lassen sich in den Deckelinnenraum einführen und werden erst dann gespreizt. Weiter sind auch Greifelemente, z. B. mit zangenartigen Klemmmechanismen, einsetzbar, die das Garantieband umlaufend oder an beabstandeten Stellen erfassen.

Das Mitnahmeelement ist insbesondere als Hülse ausgebildet, die bezüglich des Dorns koaxial geführt ist. So wird eine umlaufend gleichmässige Interaktion zwischen Mitnahmeelement und Garantieband bzw. Anbindungsmittel erreicht. Die koaxiale Anordnung von Dorn und hülsenförmigem Mitnahmeelement ermöglicht zudem eine stabile und einfache Lagerung des Mitnahmeelements und eine definierte Weiterbewegung des abgetrennten Garantiebandes, indem dieses weiter vom Dorn geführt wird und auf diesem zunächst aufgefädelt bleibt.

Mit Vorteil weist eine Dornlängsrichtung zu einer horizontalen Ebene einen Winkel von mindestens 30° auf, wobei die Bewegung zur Messung der Abreisskraft nach oben erfolgt und wobei die Vorrichtung eine Auffangeinrichtung für den Deckelgrundkörper und das abgerissene Garantieband umfasst.

Wenn die Längsrichtung des Dorns eine substanzielle vertikale Komponente aufweist, können der Deckelgrundkörper und das Garantieband mit Hilfe der Schwerkraft vom Dorn weg befördert werden. Zusätzliche Fördermittel in der unmittelbaren Nachbarschaft des Dorns (wie Absaugvorrichtungen oder Magnete bei der Verarbeitung von Verschlussdeckeln aus ferromagnetischen Materialien) erübrigen sich. Die Auffangeinrichtung stellt sicher, dass die vom Dorn nach unten fallenden Grundkörper und Bänder für den Abtransport sicher aufgefangen werden. Anstelle der Gravitation oder zur Unterstützung derselben kann - wie unten ausgeführt - Druckluft zum Abblasen insbesondere des Grundkörpers eingesetzt werden.

Mit Vorteil weist die Auffangeinrichtung eine in der Auffangposition geneigte Auffangfläche auf, so dass der aufgefangene Deckelgrundkörper und das aufgefangene Garantieband aufgrund der Schwerkraft automatisch weiter gefördert werden. Dadurch können gesonderte Fördermittel, die mit der Auffangeinrichtung zusammenwirken, vermieden werden.

Mit Vorteil weist die Dornlängsrichtung zur horizontalen Ebene eine Neigung von 10-80° auf, und die Auffangfläche der Auffangeinrichtung steht in der Auffangposition senkrecht zur Dornlängsrichtung.

Die schräge Anordnung des Dorns und der Auffangfläche der Auffangeinrichtung ermöglicht eine besonders einfache Konstruktion, bei welcher insbesondere eine Einheit, welche den Dorn sowie die Lagerung der Auffangeinrichtung umfasst, zu einer Horizontalen geneigt verbaut sein kann. Die schräge Anordnung ermöglicht es zudem, dass die Zuführungsrichtung für die Verschlussdeckel in Längsrichtung des Dorns und die aufgrund der Schwerkraft vertikal nach unten gerichtete Abführungsrichtung für die Grundkörper und Garantiebänder unterschiedlich sind. Mögliche Konflikte zwischen der Zu- und der Abführung können so bereits konstruktiv minimiert werden.

Eine geneigte Anordnung kann auch bei der Auflage für den Deckelgrundkörper vorteilhaft sein, insbesondere dann, wenn diese zur Bereitstellung des zu prüfenden Verschlussdeckels dient. In diesem Fall kann der Deckel mit Hilfe der Schwerkraft auf die Auflage gefördert werden (z. B. gegen Anschläge als Positioniereinrichtungen), so dass konstruktiv aufwendige Fördereinrichtungen im Bereich der Auflage vermieden werden.

Besonders bevorzugt ist eine ganze Baugruppe der Vorrichtung mit Zuführung, Dorn und Abführung insgesamt schräg angeordnet. So lässt sich der konstruktive Aufwand minimieren.

Alternativ ist auch eine vertikale oder annähernd vertikale Anordnung des Dorns möglich: Das abzuführende Material kann in diesem Fall beispielsweise mit Hilfe einer Ausblasvorrichtung aus dem Zuführungsweg für die Verschlussdeckel wegbefördert werden, und durch ein Durchtrennen des Garantiebandes in ausreichend viele Teile (z. B. mindestens 2 oder 3 Teile) lässt sich sicherstellen, dass das Band nicht am Dorn verbleibt, sondern aufgrund der Schwerkraft auf die Auffangeinrichtung fällt. Auch eine horizontale Anordnung des Dorns bzw. eine geneigte Anordnung mit einem Winkel von unter 10° ist möglich. In diesem Fall kann es sinnvoll sein, eine gesonderte Vorrichtung zum Lösen des Deckelgrundkörpers vom Dorn vorzusehen, z. B. einen im Dorn gelagerten mechanischen Ausstossmechanismus oder einen in die Stirnseite des Dorns mündenden Auslass für Pressluft. In diesem Fall kann es zudem von Vorteil sein, wenn das Garantieband an mehreren Stellen durchtrennt wird, so dass sich alle Teile sicher vom Dorn lösen.

Bevorzugt ist eine Begrenzungseinrichtung vorhanden, die selektiv in einen Bereich vor einem freien Ende des Kontaktelements bewegbar, insbesondere einschwenkbar, ist. Entsprechend wird im Rahmen des erfindungsgemässen Verfahrens mit Vorteil nach dem Ergreifen des Deckelgrundkörpers durch das Mitnahmeelement eine Begrenzungseinrichtung in einen Bereich vor einem freien Ende des Kontaktelements bewegt, insbesondere eingeschwenkt.

Die Begrenzungseinrichtung verhindert ein Verkanten des Deckelgrundkörpers, wenn vom Mitnahmeelement einseitig Kräfte auf diesen ausgeübt werden. Sie wird entsprechend insbesondere in den genannten Bereich bewegt, bevor ein Abreissen eines Anbindungsmittels des Verschlussdeckels erfolgen kann. Anstelle einer Schwenkbewegung lässt sich die Begrenzungseinrichtung auch mit einer linearen Bewegung, insbesondere in einer Richtung senkrecht zur Interaktionsrichtung in den Bereich vor dem freien Ende des Kontaktelements und aus diesem heraus bewegen. Die Begrenzungseinrichtung ist bevorzugt als Platte ausgebildet, die in einer Ebene senkrecht zur Interaktionsrichtung dem Kontaktelement zugewandt eine ebene Oberfläche aufweist. Der Abstand dieser Oberfläche von der Stirnfläche des Kontaktelements beträgt insbesondere maximal einen Drittel, bevorzugt maximal einen Sechstel des Aussendurchmessers des Deckelgrundkörpers.

Mit Vorteil sind die Auffangeinrichtung und die Begrenzungseinrichtung um dieselbe Schwenkachse schwenkbar. Dies ermöglicht eine besonders einfache und kompakte Konstruktion, wobei Elemente der Schwenkachse sowohl für die Auffangeinrichtung und die Begrenzungseinrichtung genutzt werden können.

Mit Vorteil umfasst die Vorrichtung einen selektiv aktivierbaren Anschlag für den Deckelgrundkörper, der derart in einer Zuführung für den Deckelgrundkörper angeordnet ist, dass der Deckelgrundkörper bei aktiviertem Anschlag in einer ersten Position positioniert wird, in der der Dichtstempel zur Bildung der abgedichteten Kammer mit dem Deckelgrundkörper zusammenwirken kann.

Der Anschlag kann beispielsweise pneumatisch aktiviert werden und Elemente umfassen, die selektiv in einen Zuführungsweg für den Deckelgrundkörper und aus diesem heraus bewegt werden können, z. B. seitlich, in einer horizontalen Richtung, oder vertikal nach oben und/oder nach unten.

Es kann ein zweiter Anschlag für den Deckelgrundkörper vorhanden sein, der derart in der Zuführung für den Deckelgrundkörper angeordnet ist, dass er den Deckelgrundkörper in einer zweiten Position positioniert, in der das Mitnahmeelement das Garantieband ergreifen kann. Der zweite Anschlag kann fix an der Vorrichtung angeordnet sein, bevorzugt ist seine Position aber zumindest manuell justierbar, so dass die Vorrichtung auf einfache Weise an verschiedene Verschlussdeckel-Aussendurchmesser angepasst werden kann.

Die Einrichtung zur Erfassung des Gasaustritts oder Gaseintritts umfasst bevorzugt eine Druckmessvorrichtung zur Messung eines Kammerdrucks. Diese Einrichtung kann den Druck insbesondere einlassseitig messen. Mit ihrer Hilfe kann zunächst sichergestellt werden, dass ein vorgegebener gewünschter Überdruck oder Unterdruck in der Kammer erzeugt wird, anschliessend wird die Kammer zusammen mit einem Drucksensor der Druckmessvorrichtung von der Druckluftquelle isoliert und der Druckabfall oder die Druckzunahme während einer vorgegebenen Zeit (oder bis zum Erreichen eines vorgegebenen Werts) gemessen. Die Dichtigkeit lässt sich somit unmittelbar quantifizieren. Falls der Restdruck nach der vorgegebenen Zeit ausreichend hoch, der Druckabfall also ausreichend gering, ist, hat der Verschlussdeckel die Dichtigkeitsprüfung bestanden. (Analog kann von einem Bestehen der Prüfung ausgegangen werden, wenn eine gewisse minimale Zeit verstrichen ist, bis der vorgegebene Restdruck erreicht wird.)

Anstelle einer Druckmessung kann das Druckgasreservoir, in dem der vorgegebene Druck herrscht, nach dem Abtrennen der Zufuhrleitung über eine Bypassleitung mit geringem Querschnitt mit der Kammer verbunden bleiben, wobei im Bypass eine Durchflussmessung durchgeführt wird, z. B. mit Hilfe eines kalorimetrischen Durchflusssensors. Die Strömung zeigt an, dass zur Aufrechterhaltung des Kammerdrucks Luft nachströmen muss, wobei die Menge nachströmender Luft wiederum ein Mass für die (Un-)Dichtigkeit ist.

In anderen Ausführungsformen umfasst die Einrichtung zur Erfassung des Gasaustritts oder Gaseintritts anstelle oder zusätzlich zur Druckmessvorrichtung eine Schnüffelsonde. Diese ermöglicht eine präzise und schnelle Erfassung eines geeigneten Prüfgases (z. B. einer Mischung aus Stickstoff und Wasserstoff), das aus der Kammer in die Umgebung entweicht.

Mit Vorteil umfasst die Vorrichtung eine Ausblasvorrichtung zum Abtransport des Deckelgrundkörpers und/oder des Garantiebandes. Die Ausblasvorrichtung kann insbesondere seitlich gerichtete Luftdüsen umfassen, so dass sich mit einem Luftstoss der Deckelgrundkörper und/oder das Garantieband seitlich über die Auffangeinrichtung wegbewegen lässt.

Mit Vorteil umfasst die Vorrichtung eine Trennvorrichtung zum Durchtrennen des Garantiebandes nach dem Abreissen vom Deckelgrundkörper.

Das Durchtrennen des Garantiebands führt zu einer erheblichen Vereinfachung der Abfuhr des Garantiebands von der Prüfvorrichtung, insbesondere dann, wenn die Prüfvorrichtung derart ausgebildet ist, dass die abgerissenen Garantiebänder auf ein Element aufgefädelt werden. Das Durchtrennen ermöglicht dann einen Abtransport, der nicht zwingend axial entlang des Elements erfolgen muss. Es kann somit grundsätzlich eine unbeschränkte Anzahl von Messungen durchgeführt werden. Dies im Gegensatz zum Fall, in welchem zunächst mehrere Garantieringe auf dem Element aufgefädelt bleiben.

Das Durchtrennen ist nicht nur dann sinnvoll, wenn das Garantieband als Ganzes vom Deckelgrundkörper abgerissen wird, sondern auch dann, wenn es beim Öffnungsvorgang entlang des Umfangs so durchtrennt wird, dass Abschnitte verbleiben, die einen Winkel von mehr als 180° beschreiben.

Bevorzugt umfasst die Trennvorrichtung mindestens ein im Umfangsbereich des Dorns angeordnetes Schneidmesser, welches derart ausgebildet ist, dass das Garantieband bei einer Bewegung über das Schneidmesser, entlang der Dornlängsrichtung, durchtrennt wird.

Beim Schneidvorgang ist das Garantieband auf dem Mitnahmeelement gelagert, so dass bei entsprechender Zustellung des Schneidmessers ein sicherer Schnitt erfolgt. Das Schneidmesser kann relativ zum Dorn fix angeordnet werden, die notwendige Relativbewegung ergibt sich aus der axialen Bewegung des Mitnahmeelements relativ zum Dorn (und damit zum Schneidmesser).

Alternativ werden bewegliche Schneidmesser oder Schneidscheiben bzw. andersartige Trennwerkzeuge, z. B. beheizte Schwerter oder Laserwerkzeuge, eingesetzt.

Bevorzugt umfasst die Trennvorrichtung mindestens zwei Schneidmesser, welche derart angeordnet sind, dass das Garantieband an zwei umfangsmässig beabstandeten Stellen durchtrennt wird. Beispielsweise können zwei Schneidmesser vorgesehen werden, die einander gegenüberliegend angeordnet sind (also einen Winkel von 180° einschliessen). Auch möglich ist es, drei oder mehr Schneidmesser einzusetzen, die bevorzugt gleichmässig entlang des Umfangs angeordnet sind.

Zwei oder mehr Teile des Garantiebandes, welche durch das Durchtrennen entstehen, lassen sich deutlich einfacher und zuverlässiger abtransportieren als ein einziges (durchschnittenes) Band. Bei einem Durchtrennen in mehrere Teile lassen sich diese beispielsweise auch auf einfache Weise absaugen.

Mit Vorteil weist ein hülsenförmiges Mitnahmeelement mindestens eine Nut in Dornlängsrichtung auf, welche mit dem mindestens einen Schneidmesser zusammenwirkt. Die Nut auf der Aussenseite des Mitnahmeelements ermöglicht ohne weiteres ein Passieren des Schneidmessers, ohne dass das Mitnahmeelement oder das Schneidmesser bewegliche Teile aufweisen muss. Gegenüber einem mehrteiligen Mitnahmeelement, dessen Teile jeweils zwischen den Schneidmessern angeordnet sind, ergibt sich eine einfachere Konstruktion mit verbesserter Stabilität.

Mit Vorteil umfasst die Vorrichtung weiter eine Auswerteeinheit zum Empfangen von Messwerten der Messungen der Abreisskraft, zum Feststellen anhand dieser Messwerte, ob die Verbindung des Garantiebands und/oder des mindestens einen Anbindungsmittels mit dem Deckelgrundkörper vorgegebene Eigenschaften erfüllt und zum Ausgeben von Ergebnissen dieser Feststellung. Analog dazu empfängt die Auswerteeinheit auch Messwerte von der Einrichtung zur Erfassung des Gasaustritts oder Gaseintritts und verarbeitet diese, um festzustellen, ob die Abdichtung den Erfordernissen genügt. Die Ausgabe der Ergebnisse kann über ein integriertes Ausgabegerät erfolgen. So kann das Ergebnis auf einen Bildschirm optisch dargestellt und/oder über einen Lautsprecher akustisch ausgegeben werden. Die Ausgabe kann auch über eine Schnittstelle erfolgen, die mit einem Ausgabegerät, einem Gerät zur Weiterverarbeitung und/oder Speicherung der Informationen oder mit einer Maschinensteuerung verbindbar ist.

Im einfachsten Fall wird derjenige Wert der Abreisskraft bestimmt und ausgegeben bzw. weitergeleitet, welcher zum Abreissen oder Durchtrennen des Garantiebandes bzw. des Anbindungsmittels geführt hat. Es handelt sich dabei in der Regel um den maximalen Kraftwert, welcher während eines Prüfvorgangs gemessen wurde. (In der Regel tritt die maximale Kraft bereits vor dem eigentlichen Abreissen oder Durchtrennen auf. Dennoch ist die maximale Kraft ein taugliches Mass zur Beurteilung der korrekten Ausbildung der Verbindung zwischen Garantieband bzw. Anbindungsmittel und Grundkörper.)

Bevorzugt ist nun aber von der Auswerteeinheit anhand mehrerer empfangener Messwerte für dieselbe Verbindung auch feststellbar, ob einer von mehreren Stegen der Verbindung mit dem Garantieband und/oder ein Element von mehreren Elementen des Anbindungsmittels eine verglichen mit anderen Stegen bzw. Elementen erheblich reduzierte oder erhöhte Abreisskraft aufweist. Dazu werden mehrere Kraftwerte bestimmt und analysiert. Das frühzeitige oder verzögerte Abreissen eines Stegs bzw. Elements äussert sich in der Regel durch mehrere (lokale) Kraftmaxima bzw. einen stufenförmigen Abfall der gemessenen Kraft. Liegen solche vor und weisen sie einen bestimmten minimalen Abstand im Kraft-Weg- bzw. Kraft-Zeit-Verlauf auf, kann auf ein nichtstandardgemässes Abreissen und damit auf einen möglichen Produktionsfehler geschlossen werden. Die mehreren empfangenen Messwerte können vor der Analyse vorbearbeitet werden, z. B. kann eine Mittelwertbildung erfolgen, es kann eine Standardabweichung oder Ableitung berechnet werden oder es werden andere statistische Berechnungen vorgenommen.

Bevorzugt umfasst die Vorrichtung
d) eine Zufuhreinrichtung zur automatischen Zufuhr des Verschlussdeckels zum Dichtstempel sowie zum Mitnahmeelement und Kontaktelement; und
e) eine Abfuhreinrichtung zur automatischen Abfuhr des Deckelgrundkörpers und des abgerissenen Garantiebandes vom Mitnahmeelement und/oder dem Kontaktelement.

Die Anbindungsmittel werden dabei zusammen mit dem Garantieband und/oder mit dem Deckelgrundkörper abgeführt, je nachdem, wo das Abreissen stattgefunden hat. Es ist auch möglich, dass die Anbindungsmittel in einem mittleren Bereich reissen, so dass ein Teil mit dem Garantieband und ein anderer Teil mit dem Deckelgrundkörper abgeführt wird.

Die Vorrichtung kann so vollautomatisch eingesetzt werden und namentlich unmittelbar an eine Anlage zur Herstellung von Verschlussdeckeln mit Garantiebändern und/oder Anbindungsmitteln angekoppelt werden. Beispielsweise werden im Anschluss an diejenige Station, in welcher die Garantiebänder bzw. Anbindungsmittel hergestellt oder fertiggestellt werden, periodisch Verschlussdeckel ausgeleitet (z. B. mit Hilfe einer Blaseinheit) und zur Zufuhreinrichtung der Vorrichtung geführt. So kann beispielsweise jede Minute oder alle 30 s (oder noch häufiger) eine Prüfung vorgenommen werden. Grundsätzlich lassen sich mit einer entsprechend ausgebildeten und betriebenen erfindungsgemässen Vorrichtung bis zu 5 Verschlussdeckel pro Minute (oder sogar noch mehr) sowohl hinsichtlich Dichtigkeit als auch hinsichtlich der Verbindungsqualität von Garantiering und Anbindungsmittel prüfen. Herkömmliche manuelle Kontrollen wurden oft nur halbstündlich oder gar nur stündlich vorgenommen. Bei einer Produktionsrate von bis zu 3'500 Deckeln pro Minute betrug der mögliche Ausschuss im schlechtesten Fall somit bis zu 2 10'000 Verschlussdeckel.

Zeigt die Prüfung Probleme an, können umgehend entsprechende Massnahmen an der Anlage vorgenommen werden. Dadurch wird der Ausschuss minimiert.

Eine erfindungsgemässe Anlage zum Schneiden eines Garantiebands und/oder eines Anbindungsmittels eines Verschlussdeckels umfasst mit Vorteil
- eine Schneideinrichtung zum Erzeugen umfangsseitiger Schnitte zur Bildung des Garantiebands und/oder des Anbindungsmittels an einem Deckelgrundkörper des Verschlussdeckels;
- eine nachfolgend zur Schneideinrichtung angeordnete erfindungsgemässe Vorrichtung zum Prüfen einer Verbindung des Garantiebands und/oder des Anbindungsmittels mit dem Deckelgrundkörper und zum Prüfen einer Dichtigkeit des Deckelgrundkörpers mit einer automatischen Zufuhreinrichtung und einer automatischen Abfuhreinrichtung,
wobei eine Zufuhr des Verschlussdeckels von der Schneideinrichtung zur Vorrichtung zum Prüfen automatisch erfolgt.

Bei einer bevorzugten Ausführungsform der erfindungsgemässen Anlage ist die Steuereinrichtung derart ausgebildet, dass in Abhängigkeit der übermittelten Ergebnisse ein Verarbeitungsparameter der Schneideinrichtung, insbesondere eine Temperatur eines Schneidmessers der Schneideinrichtung, beeinflussbar ist.

Es hat sich gezeigt, dass beim Betrieb einer solchen Schneideinrichtung für Verschlussdeckel aus Kunststoff die Schärfe des Schneidmessers, welche sich während des Betriebs aufgrund der Abnutzung ändert, und die Temperatur des Schneidmessers, welche sich mit Hilfe einer steuerbaren Heizung beeinflussen lässt, die kritischen Grössen für das Arbeitsergebnis sind. Namentlich kann ein Schärfeverlust des Schneidmessers zu einem gewissen Grad durch eine erhöhte Temperatur kompensiert werden. Ergeben sich als durch einen Schärfeverlust weniger tiefe oder unvollständige Schlitze, führt dies zu einer erhöhten Abreisskraft, die zum Ab- oder Durchtrennen des Garantiebandes bzw. zur Erzeugung des Anbindungsmittels notwendig ist. Dies wird von der Prüfvorrichtung festgestellt und an die Steuereinrichtung der Anlage übermittelt. Letztere kann dann die Heizung des Schneidmessers hochregeln, um die Temperatur des Schneidmessers zu erhöhen, bis wieder befriedigende Werte der Abreisskraft resultieren. Eine zu kleine Abreisskraft der Anbindungsmittel und/oder des Garantiebands kann auf einen Fehlschnitt hinweisen.

Falls das Schneidmesser bereits auf eine vorgegebene maximale Temperatur beheizt wird, kann bei der Feststellung nicht-standardgemässer Verschlussdeckel ein Messerwechsel bzw. ein Nachschleifvorgang für das Messer ausgelöst werden. Diese Massnahmen können automatisch in der Schneideinrichtung oder manuell ausgeführt werden.

Alternativ oder zusätzlich zur Temperatur kann auch eine Zustellung des Schneidmessers in Abhängigkeit der übermittelten Ergebnisse gesteuert werden.

Es kann von Vorteil sein, wenn eine Zuordnung eines geprüften Verschlussdeckels zu einem Teilwerkzeug der Schneideinrichtung, welches beim Schneiden des Garantiebands bzw. des Anbindungsmittels mit dem Verschlussdeckel zusammengewirkt hat, und/oder zu einer Kavität einer Spritzgussform bzw. einer Compression-Molding-Form vorgenommen wird, so dass anhand der Messungen der Abreisskraft festgestellte Fehlfunktionen diesem Teilwerkzeug und/oder der Kavität zuordenbar sind. Bei bekannten Schneideinrichtungen sind Schneidmesser mit bogenförmiger Schneide umfangsseitig stationär angeordnet, und die zu verarbeitenden Schlussdeckel werden von mehreren auf einem Drehtisch angeordneten drehbaren Spanndornen diesen Schneidmessern entlang geführt. Die erwähnte Zuordnung ermöglicht in diesem Fall die Feststellung, ob bei einer dieser Spanndorne eine Fehlfunktion vorliegt. Ebenso kann eine nicht konforme Abreisskraft auf ein Problem mit der Kavität einer zur Herstellung des Verschlussdeckels benutzten Spritzgussform bzw. Compression-Molding-Form hinweisen. Die Zuordnung zur Kavität erfolgt insbesondere, indem vor der Prüfung des Garantiebands bzw. Anbindungsmittels der betreffende Verschlussdeckel mittels einer Kamera optisch derart erfasst wird, dass eine im Deckel eingravierte Kennung der Kavität ausgelesen und an die Prüfvorrichtung oder direkt an eine übergeordnete Steuerung weitergegeben werden kann.

Die erfindungsgemässe Vorrichtung zum Prüfen ist nicht nur im Zusammenhang mit Schneideinrichtungen einsetzbar, sondern auch mit anderen Einrichtungen zur Herstellung von Garantiebändern und Anbindungsmitteln, z. B. Stanzeinrichtungen oder Spritzgiessmaschinen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1A-C: Schrägbilder eines Verschlussdeckels mit Garantieband und Anbindungsmittel im Ausgangszustand, nach dem Abtrennen des Garantierings und nach der Entfernung vom Flaschenhals;
- Fig. 2: eine Seitenansicht einer Ausführungsform der erfindungsgemässen Vorrichtung zum Prüfen einer Verbindung eines Garantiebands und eines Anbindungsmittels eines Verschlussdeckels mit einem Deckelgrundkörper und zum Prüfen einer Dichtigkeit des Deckelgrundkörpers;
- Fig. 3: eine erste Schrägansicht der Vorrichtung;
- Fig. 4: eine zweite Schrägansicht der Vorrichtung;
- Fig. 5: eine Detailansicht des Interaktionsbereichs der Vorrichtung mit dem Verschlussdeckel;
- Fig. 6: ein Schrägbild der Mitnahmehülse der erfindungsgemässen Vorrichtung; und
- Fig. 7: ein Kraft-Weg-Diagramm eines Prüfvorgangs.

Grundsätzlich sind in den Figuren gleiche Teile mit gleichen Bezugszeichen versehen.

### Wege zur Ausführung der Erfindung

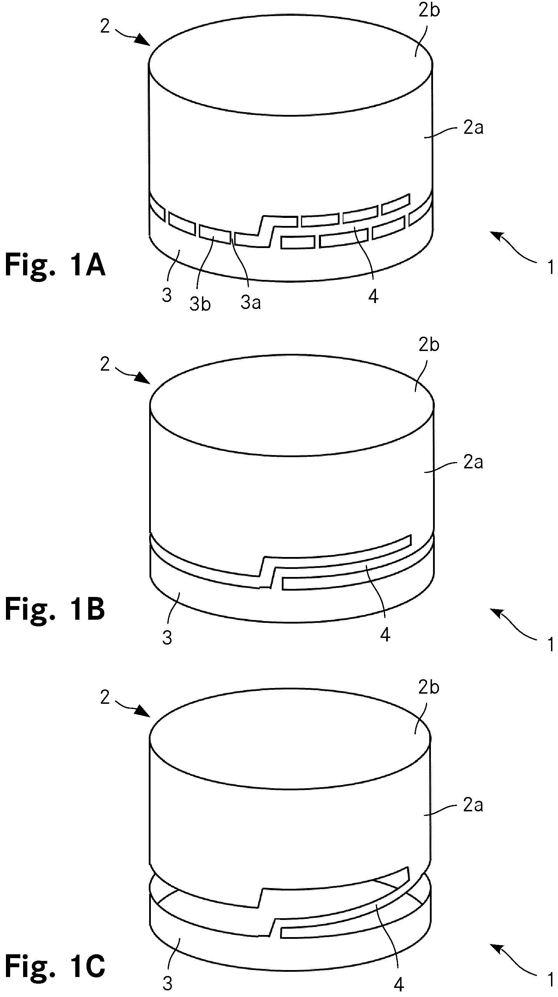

Die Figuren 1A-1C zeigen Schrägbilder eines Verschlussdeckels mit Garantieband und Anbindungsmittel im Ausgangszustand, nach dem Abtrennen des Garantierings und nach der Entfernung vom Flaschenhals. Der Verschlussdeckel 1 weist einen Deckelgrundkörper 2 auf, welcher aus einem kreiszylindrischen Mantel 2a und einem Boden 2b gebildet ist, sowie ein Garantieband 3 mit einem bandförmigen Teil, welches über mehrere Stege 3a mit dem Mantel 2a des Deckelgrundkörpers 2 verbunden ist. Die Geometrie des Stegbereichs ist derart, dass nach dem Aufreissen der Stege 3a das Garantieband 3 über eine Verbindung 4 weiterhin mit dem Deckelgrundkörper 2 verbunden bleibt (vgl. Figur 1B). Diese Verbindung bleibt auch bestehen, wenn der Verschlussdeckel 1 weiter aufgeschraubt und schliesslich vom Flaschenhals getrennt wird. Über dem am Flaschenhals verbleibenden Garantieband 3 ist der Deckelgrundkörper also auch nach dem Öffnen weiterhin über die Verbindungen gehalten.

Der bandförmige Teil ist nach innen verdickt, so dass sich hinter dem bandförmigen Teil in Richtung des Bodens 2b ein Hinterschnitt ergibt. Im Zusammenhang mit dem beschriebenen Ausführungsbeispiel wird davon ausgegangen, dass der Verschlussdeckel 1 aus Kunststoff (insbesondere Polyethylen PE oder Polypropylen PP) hergestellt ist und in an sich bekannter Weise ein Innengewinde zum Aufschrauben auf eine Flasche, insbesondere eine Getränkeflasche aus PET oder Glas, aufweist. Der Verschlussdeckel 1 wird im Spritzgussverfahren gefertigt, das Garantieband 3 wird anschliessend hergestellt, indem mittels einer Schneideinrichtung Schlitze 3b zwischen den verbleibenden Stegen 3a eingebracht werden und indem ein unterer Abschnitt des bandförmigen Teils nach innen hochgeklappt wird, so dass sich die Verdickung ergibt.

Die Erfindung lässt sich auch mit andersartigen Deckeln einsetzen, z. B. mit solchen aus Metallblech oder mit solchen, bei welchen das Garantieband und/oder das Anbindungsmittel ohne zusätzlichen Schneidprozess bereits während des Spritzgiessens ausgebildet wird. Anstelle einer einzelnen Verbindung können nach dem Durchtrennen der Stege mehrere Verbindungen bestehen bleiben, um den Deckelgrundkörper 2 weiterhin am Flaschenhals zu halten.

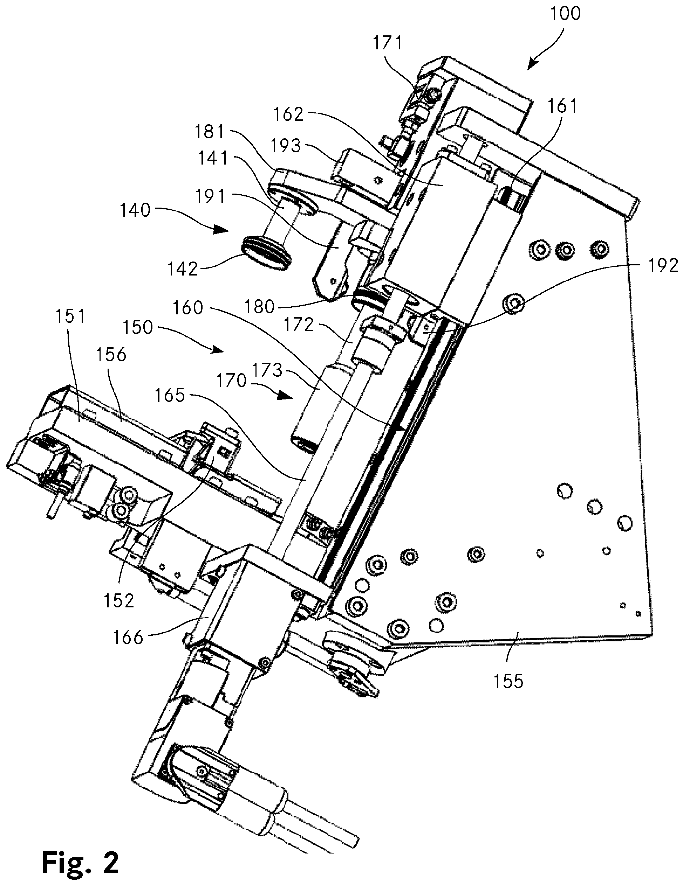

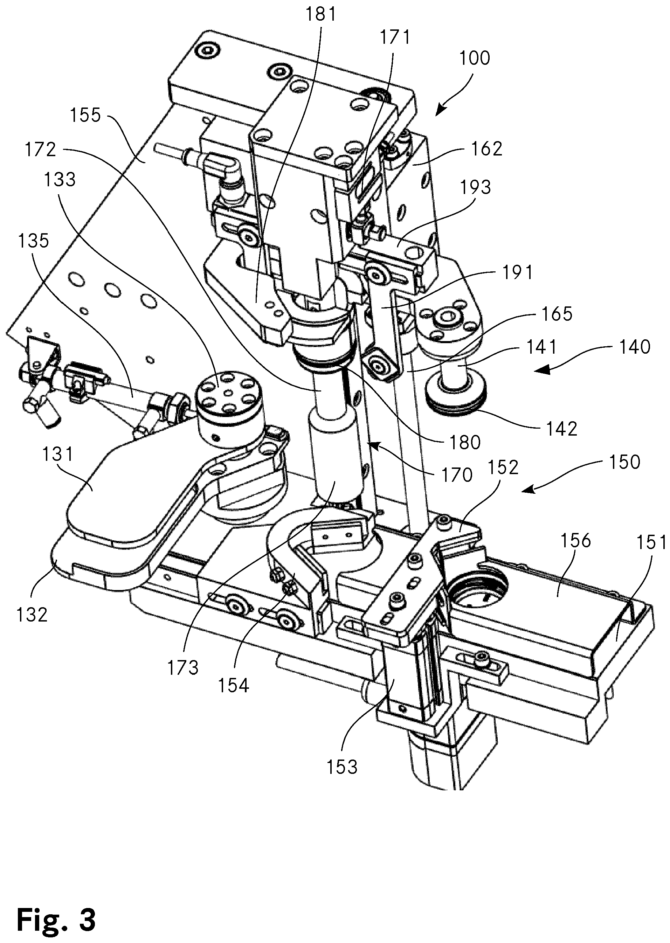

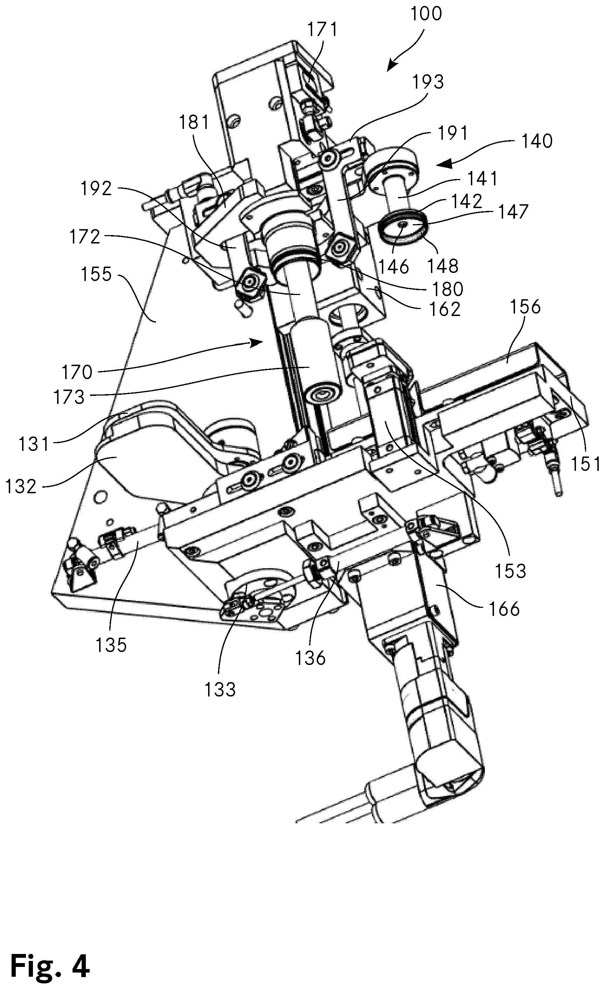

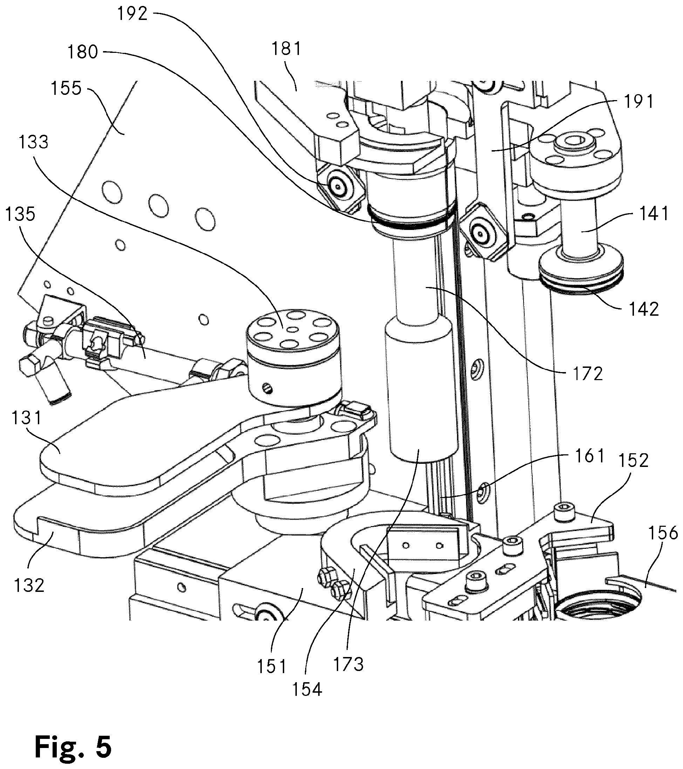

Die Figur 2 ist eine Seitenansicht einer Ausführungsform der erfindungsgemässen Vorrichtung zum Prüfen einer Verbindung eines Garantiebands und eines Anbindungsmittels eines Verschlussdeckels mit einem Deckelgrundkörper und zum Prüfen einer Dichtigkeit des Deckelgrundkörpers. Die Figur 3 zeigt eine erste Schrägansicht, die Figur 4 eine zweite Schrägansicht und die Figur 5 eine Detailansicht des Interaktionsbereichs der Vorrichtung mit dem Verschlussdeckel.

Die Vorrichtung dient zum Prüfen von Verschlussdeckeln mit Garantieband 3 und Verbindungen 4 eines Anbindungsmittels (Tether).

Die Prüfvorrichtung 100 umfasst eine Prüfeinheit 150, die an einer Grundplatte 155 angeordnet ist. Die Grundplatte 155 bildet eine schräge Stützfläche für die Prüfeinheit 150 aus, ihre Hauptebene ist senkrecht orientiert. Auf der Stützfläche der Grundplatte 155 ist eine Schiene 161 einer Linearführung 160 befestigt. Auch eine Spindel 165 mit dem zugehörigen Antrieb, einem Servomotor 166, ist an ihrem oberen Ende an der Grundplatte 155 und an ihrem unteren Ende an einer (hier nicht dargestellten) Grundplatte der Prüfvorrichtung 100 gelagert. Der Servomotor 166 (oder alternativ ein Schrittmotor) ist unterhalb der Grundplatte angeordnet, sein Abtrieb ist mit der Spindel 165 verbunden. Die Längsachse der Spindel 165 verläuft parallel zur Stützfläche und damit zur Schiene 161 der Linearführung 160.

Die Spindel 165 wirkt mit einem Kugelumlauf zusammen, der an einem Schlitten 162 angeordnet ist. Der Schlitten 162 weist Führungselemente auf, die mit der Schiene 161 zusammenwirken. Durch Betätigen der Spindel 165 mittels des Servomotors 166 kann der Schlitten entlang der Schiene 161 bewegt werden.

Die Prüfeinheit 150 umfasst weiter einen kreiszylindrischen Dorn 170, welcher über eine Kraftmesseinheit 171 mit der Grundplatte 155 verbunden ist. Die Längsausdehnung des Dorns 170 verläuft parallel zur Stützfläche, zur Schiene 161 und zur Spindel 165. Die Kraftmesseinheit 171 misst auf die Stirnfläche des Dorns 170 übertragene Druckkräfte.

Der Dorn 170 umfasst einen Schaft 172 und einen am freien Ende am Schaft 172 ausgebildeten Kopf 173. Im Bereich des Kopfes 173 vergrössert sich der Durchmesser des Dorns 170, so dass er im Wesentlichen dem freien Innendurchmesser des Verschlussdeckels entspricht.

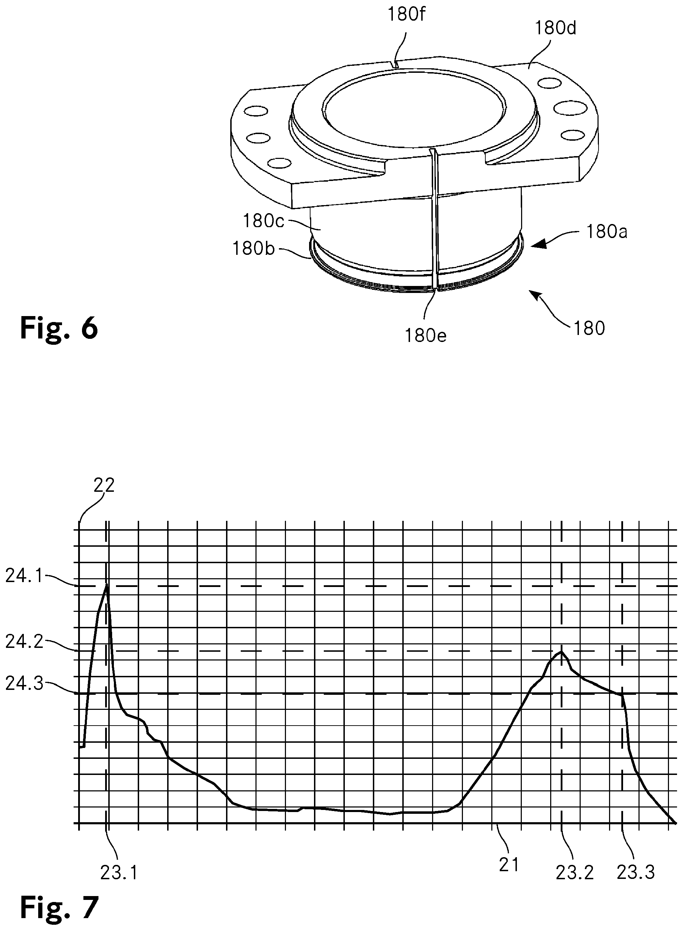

Mit dem Schlitten 162, der mit Hilfe der Linearführung 160 entlang der Schiene 161 bewegbar ist, ist ein Träger 181 verbunden. An einem ersten Schenkel derselben ist eine Mitnahmehülse 180 angeordnet. Ein Schrägbild derselben ist in der Figur 6 gezeigt. Die Mitnahmehülse 180 weist einen zylindrischen Abschnitt auf mit einem Kontaktbereich 180a für einen Verschlussdeckel, in welchem ein Wulst 180b zum Hintergreifen des Garantiebandes ausgebildet ist. Hinten an den Kontaktbereich 180a schliesst sich ein Schaftbereich 180c an, der in einen Befestigungsflansch 180d übergeht. Mit dem Befestigungsflansch 180d ist die Mitnahmehülse 180 auswechselbar am Träger 181 befestigt. Weiter weist die Mitnahmehülse 180 zwei axiale Nuten 180e, 180f auf, die einander gegenüberliegend am Aussenmantel, vom Befestigungsflansch 180d über den Schaftbereich 180c bis in den Kontaktbereich 180a verlaufend angeordnet sind.

Die Mitnahmehülse 180 umschliesst den Dorn 170 koaxial. Mit Hilfe der Linearführung 160 lässt sich die Mitnahmehülse 180 entlang des Dorns 170 bewegen.

Über eine Halterung 193 an der Grundplatte 155 angeordnet sind ferner zwei Schneidmesser 191, 192, deren Schneiden sich in einem vorgegebenen Abstand parallel zum Mantel des Dorns 170 erstrecken. Der Abstand lässt sich zur Anpassung an unterschiedliche Verschlussdeckeldurchmesser manuell einstellen. Dazu sind die Schneidmesser 191, 192 in radialen Führungen befestigt. Die Schneidmesser 191, 192 sind wie der Dorn 170 stationär angeordnet und alle drei Elemente weisen einen festen Ortsbezug auf. Die Schneidmesser 191, 192 und die Mitnahmehülse 180 sind so angeordnet, dass die Schneiden der Schneidmesser 191, 192 in den Nuten der Mitnahmehülse 180 aufgenommen sind, wenn die Mitnahmehülse 180 über den Bereich der Schneidmesser 191, 192 bewegt wird. Die Mitnahmehülse 180 lässt sich somit von einer Position vollständig unterhalb der Schneidmesser 191, 192 bis in eine Position vollständig oberhalb der Schneidmesser 191, 192 bewegen. Falls ein Garantieband von der Mitnahmehülse 180 mitgenommen ist, indem der Wulst 180b mit dem nach innen ragenden Abschnitt bzw. der Verdickung des Garantiebandes zusammenwirkt, wird das Band an zwei diametral gegenüberliegenden Stellen durch die beiden Schneidmesser 191, 192 zerschnitten, so dass zwei bogenförmige Abschnitte von je 180° gebildet werden.

Die Prüfvorrichtung 150 umfasst weiter einen Dichtstempel 140. Dieser umfasst einen Schaft 141 und einen stirnseitig, am freien Ende angeordneten Kopf 142. Der Schaft 141 ist an seinem hinteren Ende an einem zweiten Schenkel des Trägers 181 befestigt. Der Dichtstempel 140 und die Mitnahmehülse 180 werden somit immer gemeinsam in vertikaler Richtung bewegt. Der Kopf 142 weist eine Aussengeometrie auf, die im Wesentlichen derjenigen eines Flaschennackens und -halses in der mit der Innenseite eines Verschlussdeckels zusammenwirkenden Abschnitt entspricht. Zentral im Schaft ist eine Gaszuführung 146 angeordnet, die in eine zylindrische Ausnehmung 147 im Kopf 142 mündet. Die Ausnehmung 147 ist von einer kreisförmigen Wand 148 umgeben (vgl. Figur 4).

Die Prüfvorrichtung 150 umfasst weiter einen Tisch 151. Auf diesem ist ein Zuführungskanal 156 mit rechteckigem Querschnitt angeordnet, durch den Verschlussdeckel geführt über die Oberfläche des Tisches 151 geführt werden. Auf dem Tisch ist ein erster Anschlag 152 angeordnet, der zwei Anschlagbleche zum Positionieren des Verschlussdeckels in einer ersten Position umfasst. Der Zuführungskanal 156 weist in diesem Bereich oben eine Öffnung auf, so dass der Dichtstempel 140 von oben in den Verschlussdeckel eingeführt werden kann. Der erste Anschlag 152 kann mittels eines Pneumatikzylinders 153 angehoben werden, so dass der Verschlussdeckel freigegeben und sein Weitertransport im Zuführungskanal 156 ermöglicht wird.

Am Tisch befestigt ist ferner ein zweiter Anschlag 154. Der zweite Anschlag 154 dient zur Positionierung des Verschlussdeckels in einer zweiten Position, in der die Mitnahmehülse 180 in den Verschlussdeckel eindringen kann. Dazu weist der Zuführungskanal 156 an seinem dem zweiten Anschlag 154 zugewandten Ende einen Ausschnitt auf.

Die Positionen beider Anschläge 152, 154 in Zuführungsrichtung des Verschlussdeckels sind manuell anpassbar, um die Vorrichtung an unterschiedliche Verschlussdeckeldurchmesser anzupassen.

Beide Anschläge können mit Sensoren versehen sein (nicht dargestellt), damit festgestellt werden kann, ob am jeweiligen Anschlag ein Verschlussdeckel zur entsprechenden Prüfung bereitsteht.

Am Tisch 151 sind zudem zwei Elemente um eine vertikale Achse derart schwenkbar gelagert, dass sie sich selektiv und einzeln in eine Position bewegen lassen, in der sie einen Bereich abdecken, der in der Verlängerung der Längsachse des Dorns unterhalb von dessen freien Ende liegt. Bei diesen Elementen handelt es sich um eine Begrenzungsplatte 131 und einen darunter angeordneten Abführtisch 132. Beide sind an einem an seinem unteren Ende am Tisch 151 gelagerten Turm 133 schwenkbar gelagert. Die Schwenkbewegung der Begrenzungsplatte 131 wird über einen ersten, oberhalb des Tisches 151 angeordneten Pneumatikzylinder 135, die Schwenkbewegung des Abführtisches 132 über einen zweiten, unterhalb des Tisches 151 angeordneten Pneumatikzylinder 136 gesteuert.

Im Folgenden wird das mit der erfindungsgemässen Vorrichtung durchgeführte Prüfverfahren erläutert. Zu Beginn befindet sich die Vorrichtung in der in den Figuren 2-5 dargestellten Ausgangsposition: Der Träger 181 mit dem Dichtstempel 140 und der Mitnahmehülse 180 befindet sich in einer oberen, zurückgezogenen Position, und der erste Anschlag 152 ist aktiviert, d. h. in der auf den Tisch 151 abgesenkten Stellung.

Um die Testsequenz auszulösen, muss zunächst sichergestellt sein, dass sich kein Verschlussdeckel mehr in der ersten Position am ersten Anschlag 152 auf dem Tisch 151 befindet. Dies wird durch entsprechende Sensoren überprüft. Auch das Vorhandensein eines Prüflings im Zuführungskanal 156 wird sensorisch geprüft.

Sind alle Bedingungen erfüllt, wird ein Verschlussdeckel durch den Zuführungskanal 156 auf den Tisch 151 gefördert. Er liegt mit dem Boden 2b des Deckelgrundkörpers 2 auf der Auflagefläche des Tisches 151 auf, die Öffnung und das Garantieband 3 weisen nach oben. Die Endposition des Verschlussdeckels 1 wird durch den aktivierten ersten Anschlag 152 vorgegeben. Sie liegt entlang der Bewegungsrichtung des Tisches 151 und der Mitnahmehülse 180 zentrisch unter dem Dichtstempel 140.

Als nächstes wird nun der Träger 181 und damit insbesondere der Dichtstempel 140 abgesenkt, bis der Kopf 142 des Dichtstempels 140 in den Verschlussdeckel 1 eindringt und sich mit der Wand 148 auf der Deckelinnenseite abstützt. In der resultierenden Position ist der Verschlussdeckel 1 mit seinem Boden 2b zwischen dem Tisch 151 und dem Kopf 142 des Dichtstempels 140 eingeklemmt.

Zwischen dem Dichtstempel 140 und dem Verschlussdeckel ist nun eine abgedichtete Kammer gebildet. Nun kann die Dichtigkeitsprüfung durchgeführt werden. Durch die Gaszuführung 146 im Dichtstempel 140 wird Druckluft in die Kammer eingeleitet, bis ein Überdruck von 0.5 bar erreicht ist. Das Erreichen dieses vorgegebenen Überdrucks wird durch eine Druckmessvorrichtung in der Zuführung erfasst und das Ventil in der Zuführung wird geschlossen. Nach einer vorgegebenen Wartezeit von z. B. 5 s wird der Innendruck zwei Mal in einem vorgegebenen zeitlichen Abstand von z. B. 1 s gemessen und der Druckabfall zwischen diesen Messungen bestimmt. Anhand des Druckabfalls kann die Dichtigkeit des Verschlussdeckels klassiert werden:

| **Druckabfall** | **Beurteilung** | **Klassierung** |
|---|---|---|
| bis 0.008 bar | gut | grün |
| 0.008 - 0.050 bar | ausreichend | gelb |
| über 0.050 bar | ungenügend | rot |

Es können weitere Messwerte aufgenommen und ausgewertet werden. Dabei kann beispielsweise eine Messreihe des Druckabfalls durch eine lineare oder nichtlineare Funktion approximiert werden.

Nach Abschluss der Messung wird die Kammer entlüftet. Anschliessend wird der Träger 181 mit dem Dichtstempel 140 angehoben, wobei der Kopf 142 des Dichtstempels 140 den Innenraum des Verschlussdeckels verlässt und diesen freigibt.

Als nächstes kann der erste Anschlag 152 mittels des Pneumatikzylinders 153 nach oben gefahren werden, so dass ein Weitertransport des Verschlussdeckels bis zum zweiten Anschlag 154 erfolgen kann. Ist dieser Anschlag erreicht, was wiederum durch einen Sensor festgestellt wird, wird der Träger 181 und damit insbesondere auch die Mitnahmehülse 180 nach unten bewegt, bis ihr Kontaktbereich 180a mit dem Wulst 180b in den Verschlussdeckel eingedrungen ist. Der Wulst 180b drückt dabei den nach innen ragenden Teil des Garantiebandes 3 temporär radial nach aussen. Aufgrund seiner Elastizität schnappt er unmittelbar nach dem Durchgang des Wulstes 180b wieder nach innen zurück, so dass der Wulst 180b hinter einem entsprechenden Hinterschnitt positioniert ist.

Die Mitnahmehülse 180 mit dem Verschlussdeckel wird nun mit Hilfe der Linearführung 160 nach oben verfahren. Dabei tritt der Dorn 170 in den Innenraum des Verschlussdeckels ein, bis seine Stirnfläche die Innenfläche des Deckelbodens kontaktiert. Nun wird die Begrenzungsplatte 131 eingeschwenkt. Ihre obere Hauptfläche befindet sich nach dem Einschwenken parallel in einem geringen Abstand (0.5-3 mm) zur Aussenfläche des Deckels. Gleichzeitig wird auch der Abführtisch 132 eingeschwenkt.

Bei einer weiteren Bewegung nach oben ergibt sich eine wachsende Abreisskraft zwischen dem auf dem Dorn 170 abgestützten Deckelgrundkörper 2 und dem am Wulst 180b gehaltenen Garantieband 3. Während dieser Bewegung wird die Abreisskraft durch die Kraftmesseinheit 171 gemessen, und die entsprechenden Kraftwerte werden an eine Verarbeitungseinheit weitergegeben. Bei einem gewissen Weg der Mitnahmehülse 180 und einer entsprechenden gewissen Abreisskraft reisst das Garantieband 3 vom Deckelgrundkörper 2 ab, das Garantieband 3 bleibt aber über die Verbindungen 4 des Anbindungsmittels weiterhin mit dem Deckelgrundkörper 2 verbunden.

Die Mitnahmehülse 180 wird weiter vom freien Ende des Dorns 170 weg nach oben bewegt, bis auch die Verbindungen 4 reissen. Die Begrenzungsplatte 131 stellt dabei sicher, dass sich der Verschlussdeckel im Wesentlich seine Position am freien Ende des Dorns 170 beibehält, insbesondere auch dann, wenn erst eine erste der Verbindungen 4 gerissen ist und asymmetrische Kräfte auf den Verschlussdeckel wirken.

Nach dem Reissen aller Verbindungen 4 kann die Begrenzungsplatte 131 wieder in ihre Ausgangsposition zurückgeschwenkt werden. Entsprechend wird der Deckelgrundkörper vom Dorn 170 freigegeben. Die Mitnahmehülse 180 passiert zudem mit dem am Wulst 180b gehaltenen Garantieband 3 die Schneidmesser 191, 192. Das Garantieband 3 wird durch die beiden Schneidmesser 191, 192 in zwei Teile zerschnitten. Da diese nicht mehr durch den Wulst 180b zurückgehalten werden, fallen sie aufgrund der Schwerkraft nach unten auf den Abführtisch 132.

Die Geschwindigkeit der linearen Bewegung der Mitnahmehülse 180 kann in den verschiedenen Phasen des beschriebenen Kreisprozesses unterschiedlich gewählt werden. So ist beispielsweise folgender Ablauf möglich:

| Phase | Startposition | Endposition | Geschwindigkeit |
|---|---|---|---|
| 1 - Einfahren | 15 mm | 0 mm | -v₁ |
| 2 - Messen I | 0 mm | 3 mm | v₂ |
| 3 - Distanzieren | 3 mm | 15 mm | v₃ |
| 4 - Messen II | 15 mm | 20 mm | v₄ |
| 5 - Schneiden | 20 mm | 30 mm | v₅ |
| 6 - Zurückführen | 30 mm | 15 mm | v₆ = -v₃ |

Dabei gilt in der Regel v₂, v₄ (Messgeschwindigkeit) < v₁ (Einfahrgeschwindigkeit) < v₅ (Schneidgeschwindigkeit) < v₃ (Distanzieren, Eilgang). Die Messgeschwindigkeit ist in der Regel durch einen Standard vorgegeben und beträgt beispielsweise 2 mm/s, die anderen Geschwindigkeiten können im Hinblick auf eine hohe Prozesssicherheit und einen schnellen Ablauf optimiert werden.

Die Positionen sind hier von der maximal ausgefahrenen Position der Mitnahmehülse 180 aus referenziert, in welcher deren freies Ende von der Auflagefläche des Tisches 151 lediglich einen geringfügigen Abstand von einigen mm aufweist.

Zur Anpassung an verschiedene Geometrien des Verschlussdeckels lassen sich Elemente der beschriebenen Prüfvorrichtung einfach auswechseln, namentlich der Vorderteil des Dorns, die Hülse und die Schneidmesser.

Die Figur 7 zeigt ein Kraft-Weg-Diagramm eines Prüfvorgangs eines Verschlussdeckels mit Garantiering und einem Anbindungsmittel mit zwei Verbindungen. Entlang der horizontalen Achse 21 ist der Weg, entlang der vertikalen Achse 22 die gemessene Abreisskraft eingetragen. Es ist gut ersichtlich, dass die Abreisskraft ab dem Kontakt der Stirnseite des Dorns 170 mit dem Boden 2b des Deckelgrundkörpers 2 zunächst allmählich anwächst. In dieser Phase werden insbesondere die Stege zwischen dem Grundkörper und dem Garantieband gedehnt, was einen gewissen Kraftaufwand erfordert. Sobald das Garantieband abreisst, fällt die Abreisskraft stufenweise, mit dem zeitversetzten Reissen der einzelnen Stege zum Garantieband, ab. Es folgt eine Phase, in der der Kraftaufwand gering ist, weil die verbleibenden Verbindungen des Anbindungsmittels der weiteren Separation keinen grossen Widerstand entgegensetzen. Erst wenn diese Verbindungen gedehnt werden müssen, steigt die Kraft wieder an. Beim Reissen der ersten der Verbindungen ergibt sich ein weiteres lokales Kraftmaximum, erst wenn dann auch die zweite Verbindung reisst und der Garantiering endgültig vom Deckelgrundkörper getrennt ist, fällt die Kraft wieder stark ab.

Relevante Grössen, die sich aus dem Verlauf bestimmen lassen, sind insbesondere die bei den lokalen Maxima gemessenen Kräfte 24.1, 24.2 und die entsprechenden Wege 23.1, 23.2 bzw. die Kraft 24.3 beim Reissen eines zweiten Verbindungselements des Anbindungsmittels und der dazugehörige Weg 23.3. Sie können zur Bewertung der Qualität der Verbindung zwischen Garantieband und Grundkörper herangezogen werden. Wird der Kraftverlauf detaillierter betrachtet, so ist auch sichtbar, dass einige Stege später reissen als andere: Ein spätes Abreissen deutet auf stumpfwerdende Schneiden der für das Erzeugen der Schlitzgeometrie verwendeten Messer hin. Andere Eigenheiten des Verlaufs können auf ein fehlerhaftes Einspannen des Deckels in der Prüfeinrichtung hinweisen, worauf das Ergebnis verworfen und die Messung automatisch am nächsten Deckel wiederholt werden kann.

Die Erfindung ist nicht auf das dargestellte Ausführungsbeispiel beschränkt. So lassen sich insbesondere konstruktive Details der einzelnen Komponenten anders gestalten. Aufgrund der Geschwindigkeit des Messvorgangs und seiner Reproduzierbarkeit lässt sich die Prüfeinheit auch im manuellen Betrieb vorteilhaft einsetzen. Insbesondere die Zuführung kann in diesem Fall vereinfacht werden.

Zusammenfassend ist festzustellen, dass die Erfindung eine Vorrichtung schafft, welche die Prüfung von Verschlussdeckeln vereinfacht.

## Patentansprüche

1. Vorrichtung (100) zum Prüfen einer Verbindung eines Garantiebands (3) und/oder mindestens eines Anbindungsmittels eines Verschlussdeckels (1) mit einem Deckelgrundkörper (2) und zum Prüfen einer Dichtigkeit des Deckelgrundkörpers (2), umfassend
a) ein Mitnahmeelement (180) zum Ergreifen des Garantiebands (3) und/oder des mindestens einen Anbindungsmittels;
b) ein Kontaktelement (170) für den Deckelgrundkörper (2), wobei das Mitnahmeelement (180) und das Kontaktelement (170) derart in einer Interaktionsrichtung relativ zueinander beweglich sind, dass eine Abreisskraft auf Verbindungselemente (3a) zwischen Deckelgrundkörper (2) und Garantieband (3) und/oder das mindestens eine Anbindungsmittel ausübbar ist;
c) eine Kraftmessvorrichtung (171) zur Messung der Abreisskraft während der Relativbewegung zwischen dem Garantieband (3) und/oder Anbindungsmittel und dem Deckelgrundkörper (2);
d) einen Dichtstempel (140) mit einer Dichtstruktur (142), so dass eine abgedichtete Kammer zwischen dem Dichtstempel (140) und dem Deckelgrundkörper (2) ausbildbar ist;
e) eine Einrichtung (146) zur Einstellung eines vorgegebenen Gasdrucks in der Kammer;
f) eine Einrichtung zur Erfassung eines Gasaustritts aus der Kammer und/oder eines Gaseintritts in die Kammer;
wobei das Mitnahmeelement (180) und der Dichtstempel (140) gemeinsam an einem in der Interaktionsrichtung beweglichen Träger (181) senkrecht zur Interaktionsrichtung beabstandet angeordnet sind.

2. Vorrichtung (100) nach Anspruch 1, **dadurch gekennzeichnet, dass** das Kontaktelement (170) ortsfest angeordnet ist.

3. Vorrichtung (100) nach Anspruch 1 oder 2, **dadurch gekennzeichnet, dass** das Kontaktelement (170) stirnseitig an einem Dorn (170) ausgebildet ist und dass das Mitnahmeelement (180) entlang der Interaktionsrichtung linear relativ zum Dorn (170) beweglich ist.

4. Vorrichtung (100) nach Anspruch 3, **dadurch gekennzeichnet, dass** das Mitnahmeelement (180) als Hülse (180) ausgebildet ist, die bezüglich des Dorns (170) koaxial geführt ist.

5. Vorrichtung (100) nach Anspruch 3 oder 4, **dadurch gekennzeichnet, dass** eine Dornlängsrichtung zu einer horizontalen Ebene einen Winkel von mindestens 30° aufweist, wobei die Bewegung zur Messung der Abreisskraft nach oben erfolgt und wobei die Vorrichtung (100) eine Auffangeinrichtung (132) für den Deckelgrundkörper (2) und das abgerissene Garantieband (3) umfasst.

6. Vorrichtung (100) nach Anspruch 5, **dadurch gekennzeichnet, dass** die Auffangeinrichtung (132) eine in der Auffangposition geneigte Auffangfläche aufweist, so dass der aufgefangene Deckelgrundkörper (2) und das aufgefangene Garantieband (3) aufgrund der Schwerkraft automatisch weiter gefördert werden.

7. Vorrichtung (100) nach einem der Ansprüche 1 bis 6, **dadurch gekennzeichnet, dass** eine Begrenzungseinrichtung (131) in einen Bereich vor einem freien Ende des Kontaktelements (170) selektiv bewegbar, insbesondere einschwenkbar, ist.

8. Vorrichtung (100) nach Anspruch 5 oder 6 und nach Anspruch 7, **dadurch gekennzeichnet, dass** die Auffangeinrichtung (132) und die Begrenzungseinrichtung (131) um dieselbe Schwenkachse schwenkbar sind.

9. Vorrichtung (100) nach einem der Ansprüche 1 bis 8, **gekennzeichnet durch** einen selektiv aktivierbaren Anschlag (152) für den Deckelgrundkörper (2), der derart in einer Zuführung (156) für den Deckelgrundkörper (2) angeordnet ist, dass der Deckelgrundkörper (2) bei aktiviertem Anschlag (152) in einer ersten Position positioniert wird, in der der Dichtstempel (140) zur Bildung der abgedichteten Kammer mit dem Deckelgrundkörper (2) zusammenwirken kann.

10. Vorrichtung 100 nach einem der Ansprüche 1 bis 9, **dadurch gekennzeichnet, dass** die Einrichtung zur Erfassung des Gasaustritts oder Gaseintritts eine Druckmessvorrichtung zur Messung eines Kammerdrucks umfasst.

11. Vorrichtung 100 nach einem der Ansprüche 1 bis 10, **dadurch gekennzeichnet, dass** die Einrichtung zur Erfassung des Gasaustritts oder Gaseintritts eine Schnüffelsonde umfasst.

12. Vorrichtung 100 nach einem der Ansprüche 1 bis 11, **gekennzeichnet durch** eine Ausblasvorrichtung zum Abtransport des Deckelgrundkörpers (2) und/oder des Garantiebandes (3).

13. Vorrichtung 100 nach einem der Ansprüche 1 bis 12, **gekennzeichnet durch** eine Trennvorrichtung (191, 192) zum Durchtrennen des Garantiebandes (3) nach dem Abreissen vom Deckelgrundkörper (2).

14. Vorrichtung 100 nach den Ansprüchen 3 und 13, **dadurch gekennzeichnet, dass** die Trennvorrichtung (191, 192) mindestens ein im Umfangsbereich des Dorns (170) angeordnetes Schneidmesser (191, 192) umfasst, welches derart ausgebildet ist, dass das Garantieband (3) bei einer Bewegung über das Schneidmesser (191, 192), entlang der Dornlängsrichtung, durchtrennt wird.

15. Vorrichtung 100 nach einem der Ansprüche 1 bis 14, umfassend
d) eine Zufuhreinrichtung (156) zur automatischen Zufuhr des Verschlussdeckels (1) zum Dichtstempel (140) sowie zum Mitnahmeelement (180) und Kontaktelement (170); und
e) eine Abfuhreinrichtung (132) zur automatischen Abfuhr des Deckelgrundkörpers (2) und des abgerissenen Garantiebandes (3) vom Mitnahmeelement (180) und/oder dem Kontaktelement (170).

16. Anlage zum Schneiden eines Garantiebands (3) und/oder mindestens eines Anbindungsmittels eines Verschlussdeckels (1), umfassend
- eine Schneideinrichtung zum Erzeugen umfangsseitiger Schnitte zur Bildung des Garantiebands (3) und/oder des mindestens einen Anbindungsmittels an einem Deckelgrundkörper (2) des Verschlussdeckels (1);
- eine nachfolgend zur Schneideinrichtung angeordnete Vorrichtung 100 nach Anspruch 15 zum Prüfen einer Verbindung des Garantiebands (3) und/oder des mindestens einen Anbindungsmittels mit dem Deckelgrundkörper (2),
wobei eine Zufuhr des Verschlussdeckels (1) von der Schneideinrichtung zur Vorrichtung 100 zum Prüfen automatisch erfolgt.

17. Verfahren zum Prüfen einer Verbindung eines Garantiebands (3) und/oder mindestens eines Anbindungsmittels eines Verschlussdeckels (1) mit einem Deckelgrundkörper (2) und zum Prüfen einer Dichtigkeit des Deckelgrundkörpers (2), insbesondere mit einer Vorrichtung 100 nach einem der Ansprüche 1 bis 15, umfassend folgende Schritte:
a) Positionieren des Deckelgrundkörpers (2) in einer ersten Position;
b) Bewegen eines an einem Träger (181) angeordneten Dichtstempels (140) in einer Interaktionsrichtung, so dass der in der ersten Position befindliche Deckelgrundkörpers (2) kontaktiert und zwischen dem Dichtstempel (140) und dem Deckelgrundkörper (2) eine abgedichtete Kammer ausgebildet wird;
b) Einstellen eines vorgegebenen Gasdrucks in der Kammer;
c) Erfassen eines Gasaustritts aus der Kammer oder eines Gaseintritts in die Kammer;
d) Entfernen des Dichtstempels (140) vom Deckelgrundkörper (2) durch Bewegen des Trägers (181) gegen die Interaktionsrichtung;
e) Bewegen des Deckelgrundkörpers (2) in eine zweite Position, die von der ersten Position beabstandet ist;
f) Bewegen des Trägers (181) in der Interaktionsrichtung, so dass das Garantieband (3) und/oder das mindestens eine Anbindungsmittel von einem am Träger (181) beabstandet vom Dichtstempel (140) angeordneten Mitnahmeelement (180) ergriffen wird;
g) Durchführen einer Relativbewegung zwischen dem Mitnahmeelement (180) und einem Kontaktelement (170), so dass eine Abreisskraft auf Verbindungselemente (3a) zwischen Deckelgrundkörper (2) und Garantieband (3) und/oder das mindestens eine Anbindungsmittel ausgeübt wird;
h) Messen der Abreisskraft während der Relativbewegung zwischen dem Garantieband (3) und/oder Anbindungsmittel und dem Deckelgrundkörper (2).

18. Verfahren nach Anspruch 17, **dadurch gekennzeichnet, dass** nach dem Ergreifen des Deckelgrundkörpers (2) durch das Mitnahmeelement (180) eine Begrenzungseinrichtung (131) in einen Bereich vor einem freien Ende des Kontaktelements (170) bewegt, insbesondere eingeschwenkt, wird.

## Claims

1. Device (100) for testing a connection of a guarantee strip (3) and/or at least one connecting means of a closure lid (1) to a lid main body (2) and for testing a leak-tightness of the lid main body (2), comprising
a) a take-along element (180) for gripping the guarantee strip (3) and/or the at least one connecting means;
b) a contact element (170) for the lid main body (2), wherein the take-along element (180) and the contact element (170) are movable relative to one another in an interaction direction in such a way that a tear-off force can be exerted on connecting elements (3a) between lid main body (2) and guarantee strip (3) and/or the at least one connecting means;
c) a force-measuring device (171) for measuring the tear-off force during the relative movement between the guarantee strip (3) and/or connecting means and the lid main body (2);
d) a sealing plunger (140) with a sealing structure (142), such that a sealed chamber can be formed between the sealing plunger (140) and the lid main body (2);
e) a device (146) for setting a predefined gas pressure in the chamber;
f) a device for detecting a gas exit from the chamber and/or a gas entry into the chamber;
wherein the take-along element (180) and the sealing plunger (140) are arranged together spaced apart perpendicularly to the interaction direction on a carrier (181) which is movable in the interaction direction.

2. Device (100) according to Claim 1, **characterized in that** the contact element (170) is arranged in a stationary manner.

3. Device (100) according to Claim 1 or 2, **characterized in that** the contact element (170) is formed frontally on a mandrel (170), and **in that** the take-along element is movable linearly along the interaction direction relative to the mandrel (170).

4. Device (100) according to Claim 3, **characterized in that** the take-along element (180) is formed as a sleeve (180) which is guided coaxially with respect to the mandrel (170).

5. Device (100) according to Claim 3 or 4, **characterized in that** a longitudinal direction of the mandrel has an angle of at least 30° with respect to a horizontal plane, wherein the movement for measuring the tear-off force takes place upwards, and wherein the device (100) comprises a collecting device (132) for the cover main body (2) and the torn-off warranty band (3).

6. Device (100) according to Claim 5, **characterized in that** the collecting device (132) has a collecting surface which is inclined in the collecting position, such that the collected cover main body (2) and the collected guarantee strip (3) are automatically conveyed further due to the force of gravity.

7. Device (100) according to one of Claims 1 to 6, **characterized in that** a limiting device (131) is selectively movable, in particular pivotable, into a region in front of a free end of the contact element (170).

8. Device (100) according to Claim 5 or 6 and according to Claim 7, **characterized in that** the collecting device (132) and the limiting device (131) are pivotable about the same pivot axis.

9. Device (100) according to one of Claims 1 to 8, **characterized by** a selectively activatable stop (152) for the lid main body (2), which stop is arranged in a feed (156) for the lid main body (2) in such a way that, when the stop (152) is activated, the lid main body (2) is positioned in a first position in which the sealing plunger (140) can interact with the lid main body (2) in order to form the sealed chamber.

10. Device (100) according to one of Claims 1 to 9, **characterized in that** the device for detecting the gas exit or gas entry comprises a pressure measuring device for measuring a chamber pressure.

11. Device (100) according to one of Claims 1 to 10, **characterized in that** the device for detecting the gas exit or gas entry comprises a sniffer probe.

12. Device (100) according to one of Claims 1 to 11, **characterized by** a blow-out device for transporting away the lid main body (2) and/or the guarantee strip (3).

13. Device (100) according to one of Claims 1 to 12, **characterized by** a cutting device (191, 192) for cutting the guarantee strip after it has been torn off the lid main body (2).

14. Device (100) according to Claims 3 and 13, **characterized in that** the cutting device (191, 192) comprises at least one cutting blade (191, 192) which is arranged in the circumferential region of the mandrel (170) and is formed in such a way that, during a movement over the cutting blade (191, 192), the guarantee strip (3) is cut along the longitudinal direction of the mandrel.

15. Device (100) according to one of Claims 1 to 14, comprising
d) a feed device (156) for automatically feeding the closure lid (1) to the sealing plunger (140) and to the take-along element (180) and contact element (170); and
e) a removal device (132) for automatically removing the lid main body (2) and the torn-off guarantee strip (3) from the take-along element (180) and/or the contact element (170).

16. Installation for cutting a guarantee strip (3) and/or at least one connecting means of a closure lid (1), comprising
- a cutting device for producing circumferential cuts for forming the guarantee strip (3) and/or the at least one connecting means on a lid main body (2) of the closure lid (1);
- a device (100) according to claim 15 arranged downstream of the cutting device for testing a connection of the guarantee strip (3) and/or the at least one connecting means to the lid main body (2),
wherein a feed of the closure lid (1) from the cutting device to the device (100) for testing takes place automatically.

17. Method for testing a connection of a guarantee strip (3) and/or at least one connecting means of a closure lid (1) to a lid main body (2) and for testing a leak-tightness of the lid main body (2), in particular with a device (100) according to one of claims 1 to 15, comprising the following steps:
a) positioning the lid main body (2) in a first position;
b) moving a sealing plunger arranged on a carrier (181) in an interaction direction, such that the lid main body (2) located in the first position is contacted and a sealed chamber is formed between the sealing plunger (140) and the lid main body (2);
b) setting a predefined gas pressure in the chamber;
c) detecting a gas exit from the chamber or a gas entry into the chamber;
d) removing the sealing plunger (140) from the lid main body (2) by moving the carrier (181) counter to the interaction direction;
e) moving the lid main body (2) into a second position which is spaced apart from the first position;
f) moving the carrier (181) in the interaction direction, such that the guarantee strip (3) and/or the at least one connecting means is gripped by a take-along element (180) arranged on the carrier (181) spaced apart from the sealing plunger (140);
g) carrying out a relative movement between the take-along element (180) and a contact element (170), such that a tear-off force is exerted on connecting elements (3a) between lid main body (2) and guarantee strip (3) and/or the at least one connecting means;
h) measuring the tear-off force during the relative movement between the guarantee strip (3) and/or connecting means and the lid main body (2).

18. Method according to Claim 17, **characterized in that**, after the grip of the lid main body (2) by the take-along element (180), a limiting device (131) is moved, in particular pivoted, into a region in front of a free end of the contact element (170).

## Revendications

1. Dispositif (100) de vérification d'une liaison d'une bande de garantie (3) et/ou **d'au** moins un moyen de raccordement **d'un** couvercle de fermeture (1) avec un corps de base de couvercle (2) et de vérification d'une étanchéité du corps de base de couvercle (2), comprenant
a) un élément d'entraînement (180) pour saisir la bande de garantie (3) et/ou au moins un moyen de raccordement,
b) un élément de contact (170) pour le corps de base de couvercle (2), sachant que l'élément d'entraînement (180) et l'élément de contact (170) sont mobiles dans une direction d'interaction l'un par rapport à l'autre de telle manière qu'une force d'arrachage peut être exercée sur des éléments de liaison (3a) entre le corps de base de couvercle (2) et la bande de garantie (3) et/ou au moins un moyen de raccordement,
c) un dispositif de mesure de force (171) pour la mesure de la force **d'arrachage** pendant le mouvement relatif entre la bande de garantie (3) et/ou le moyen de raccordement et le corps de base de couvercle (2),
d) un tampon **d'étanchéité** (140) avec une structure d'étanchéité (142) de telle manière qu'une chambre étanchéifiée peut être constituée entre le tampon d'étanchéité (140) et le corps de base de couvercle (2),
e) un dispositif (146) de réglage d'une pression de gaz prédéfinie dans la chambre,
f) un dispositif de saisie d'une sortie de gaz de la chambre et/ou d'une entrée de gaz dans la chambre,
sachant que l'élément d'entraînement (180) et le tampon d'étanchéité (140) sont disposés ensemble distants perpendiculairement à la direction d'interaction sur un support (181) mobile dans la direction d'interaction.

2. Dispositif (100) selon la revendication 1, **caractérisé en ce que** l'élément de contact (170) est disposé de façon fixe.

3. Dispositif (100) selon la revendication 1 ou 2, **caractérisé en ce que** l'élément de contact (170) est constitué du côté avant sur un mandrin (170) et **en ce que** l'élément d'entraînement (180) peut être mobile le long de la direction d'interaction de façon linéaire par rapport au mandrin (170).

4. Dispositif (100) selon la revendication 3, **caractérisé en ce que** l'élément d'entraînement (180) est constitué sous la forme d'un manchon (180), qui est coaxialement guidé par rapport au mandrin (170).

5. Dispositif (100) selon la revendication 3 ou 4, **caractérisé en ce qu'une** direction longitudinale de mandrin vers un plan horizontal comporte un angle d'au moins 30°, sachant que le mouvement destiné à la mesure de la force d'arrachage a lieu vers le haut et sachant que le dispositif (100) comprend un système collecteur (132) pour le corps de base de couvercle (2) et la bande de garantie arrachée (3).

6. Dispositif (100) selon la revendication 5, **caractérisé en ce que** le système collecteur (132) comporte une surface de réception inclinée dans la position de réception de telle manière que le corps de base de couvercle (2) réceptionné et la bande de garantie (3) saisie sont automatiquement transportés plus loin en raison de la force de gravité.

7. Dispositif (100) selon l'une quelconque des revendications 1 à 6, **caractérisé en ce qu'**un dispositif de limitation (131) peut être déplacé, en particulier pivoté, de façon sélective dans une zone avant une extrémité libre de l'élément de contact (170).

8. Dispositif (100) selon la revendication 5 ou 6 et selon la revendication 7 **caractérisé en ce que** le système de réception (132) et le dispositif de limitation (131) peuvent pivoter autour du même axe de pivotement.

9. Dispositif (100) selon l'une quelconque des revendications 1 à 8, **caractérisé par** une butée pouvant être activée de façon sélective (152) pour le corps de base de couvercle (2), qui est disposée dans un système d'amenée (156) pour le corps de base de couvercle (2) de telle manière que le corps de base de couvercle (2) est positionnée une fois la butée (152) activée dans une première position dans laquelle le tampon d'étanchéité (140) peut coopérer avec le corps de base de couvercle (2) pour former la chambre étanchéifiée.

10. Dispositif (100) selon l'une quelconque des revendications 1 à 9, **caractérisé en ce que** le dispositif de saisie de la sortie de gaz ou de l'entrée de gaz comprend un dispositif de mesure de pression pour la mesure d'une pression de chambre.

11. Dispositif (100) selon l'une quelconque des revendications 1 à 10, **caractérisé en ce que** le dispositif de saisie de la sortie de gaz ou de l'entrée de gaz comprend une sonde de reniflage.

12. Dispositif (100) selon l'une quelconque des revendications 1 à 11, **caractérisé par** un dispositif de soufflage pour le transport du corps de base de couvercle (2) et/ou de la bande de garantie (3).

13. Dispositif (100) selon l'une quelconque des revendications 1 à 12, **caractérisé par** un dispositif de séparation (191, 192) pour le sectionnement de la bande de garantie (3) après arrachage du corps de base de couvercle (2).

14. Dispositif (100) selon les revendications 3 et 13, **caractérisé en ce que** le dispositif de séparation (191, 192) comprend au moins un couteau de coupe (191, 192) disposé dans la zone périphérique du mandrin (170), lequel est constitué de telle manière que la bande de garantie (3) est sectionnée lors d'un mouvement par le biais du couteau de coupe (191, 192) le long de la direction longitudinale de mandrin.

15. Dispositif (100) selon l'une quelconque des revendications 1 à 14, comprenant
d) un système d'amenée (156) pour l'avance automatique du couvercle de fermeture (1) vers le tampon d'étanchéité (140) ainsi que vers l'élément d'entraînement (180) et l'élément de contact (170), et
e) un système d'enlèvement (132) pour l'enlèvement automatique du corps de base de couvercle (2) et de la bande de garantie arrachée (3) de l'élément d'entraînement (180) et/ou de l'élément de contact (170).

16. Installation destinée à couper une bande de garantie (3) et/ou au moins un moyen de raccordement d'un couvercle de fermeture (1), comprenant
- un dispositif de coupe pour produire des coupes périphériques pour la formation de la bande de garantie (3) et/ou d'au moins un moyen de raccordement à un corps de base de couvercle (2) du couvercle de fermeture (1),
- un dispositif (100) disposé à la suite du dispositif de coupe selon la revendication 15 pour la vérification d'une liaison de la bande de garantie (3) et/ou d'au moins un moyen de raccordement au corps de base de couvercle (2),
sachant qu'une approche du couvercle de fermeture (1) du dispositif de coupe vers le dispositif (100) de vérification a lieu automatiquement.

17. Procédé de vérification d'une liaison d'une bande de garantie (3) et/ou d'au moins un moyen de raccordement d'un couvercle de fermeture (1) avec un corps de base de couvercle (2) et de vérification d'une étanchéité du corps de base de couvercle (2), en particulier avec un dispositif (100) selon l'une quelconque des revendications 1 à 15, comprenant les étapes suivantes :
a) positionnement du corps de base de couvercle (2) dans une première position,
b) déplacement d'un tampon d'étanchéité (140) disposé sur un support (181) dans une direction d'interaction de telle sorte que le corps de base de couvercle (2) se trouvant dans la première position entre en contact et qu'une chambre étanchéifiée est constituée entre le tampon d'étanchéité (140) et le corps de base de couvercle (2),
b) réglage d'une pression de gaz prédéfinie dans la chambre,
c) saisie d'une sortie de gaz de la chambre ou d'une entrée de gaz dans la chambre,
d) éloignement du tampon d'étanchéité (140) du corps de base de couvercle (2) par déplacement du support (181) à l'opposé de la direction d'interaction,
e) déplacement du corps de base de couvercle (2) dans une deuxième position, qui est distante de la première position,
f) déplacement du support (181) dans la direction d'interaction de telle manière que la bande de garantie (3) et/ou au moins un moyen de raccordement est saisi par un élément d'entraînement (180) disposé sur le support (181) à distance du tampon d'étanchéité (140),
g) exécution d'un mouvement relatif entre l'élément d'entraînement (180) et un élément de contact (170) de telle manière qu'une force d'arrachage est exercée sur les éléments de liaison (3a) entre le corps de base de couvercle (2) et la bande de garantie (3) et/ou au moins un moyen de raccordement,
h) mesure de la force d'arrachage pendant le mouvement relatif entre la bande de garantie (3) et/ou le moyen de raccordement et le corps de base de couvercle (2).

18. Procédé selon la revendication 17, **caractérisé en ce qu'**après la saisie du corps de base de couvercle (2) par l'élément d'enlèvement (180), un système de limitation (131) est déplacé, en particulier pivoté dans une zone avant une extrémité libre de l'élément de contact (170).
